# EUROPEAN PATENT SPECIFICATION

(11) **EP 3 889 770 B1**
(45) Date of publication and mention of the grant of the patent: **14.02.2024**
(21) Application number: 20866950.7
(22) Date of filing: 20.07.2020
(51) Int. Cl.: G06F 9/448

(54) **MINI PROGRAM MATERIAL PROCESSING**
VERARBEITUNG VON MINI-APP-MATERIAL
TRAITEMENT DE MATÉRIEL DE MINI PROGRAMME

(30) Priority: 19.02.2020 CN 202010100979
(43) Date of publication of application: 06.10.2021
(73) Proprietor: Beijing Baidu Netcom Science and Technology Co., Ltd., Beijing 100085 (CN)
(72) Inventor: LI, Xiaodong, Beijing 100085 (CN); JIN, Jin, Beijing 100085 (CN); LI, Nan, Beijing 100085 (CN); XIE, Malin, Beijing 10085 (CN); JI, Linfeng, Beijing 100085 (CN)
(74) Representative: Lucke, Andreas
(86) International application number: PCT/CN2020/102923
(87) International publication number: WO 2021/164193

(56) References cited:
- WO-A1-2019/128392
- CN-A- 110 069 186
- CN-A- 110 297 635
- CN-A- 110 333 912
- CN-A- 111 338 714
- US-A1- 2015 324 478
- US-A1- 2017 357 721
- Anonymous: "MiniApp Standardization White Paper", , 12 September 2019 (2019-09-12), XP055820587, Retrieved from the Internet: URL:https://www.w3.org/TR/2019/WD-mini-app -white-paper-20190912/ [retrieved on 2021-07-02]

## Description

### TECHNICAL FIELD

Embodiments of the present invention relate to the field of computer technology, for example, relate to data processing technology, and in particular to a method and apparatus for processing a mini app material, a medium and a program product.

### BACKGROUND

Mini app material content includes content title, description, picture link, tag, video link, etc., may be used to describe basic information of a mini app landing page. At present, a method for acquiring a mini app material content is that a developer takes the initiative to submit material content. However, a mini app includes at least hundreds or thousands of material content, and as many as tens of millions of material content. The workload for acquiring and submitting the material content is large and the efficiency is low.

For the developer, sorting and submitting the material is time-consuming and laborious, and the quality of the submitted material content is hard to guarantee. The material content may include a blank page, an invalid link, or an unclear picture, which may cause only part of the material content can be successfully distributed to acquire traffic, while the other material content cannot be browsed normally to acquire traffic data. Therefore, the current material content submission solution is inefficient and has quality problems.

WO 2019/128392 A1 describes a method for extracting business fields in an application, wherein an electronic device may read a buried point configuration file and may detect a page jump instructions for the application. When a page jump instruction is detected, the electronic device extracts a service field from a URL of a page of the application according to the buried point configuration file. However, the method does not include any verification process comprising a basic verification and an advanced verification.

In US 2017/357721 A1, a method is described for generating criteria for a plurality of web applications in an online application store, translating the criteria into at least one rule, the at least one rule based on predefined categories defined by the online application store, obtaining, metadata associated with a plurality of websites, determining, using the metadata and the at least one rule, whether any of the websites in the plurality of websites, includes code that executes a feature associated with the at least one rule, and displaying the icon as a selectable listing in the online application store.

A "MiniApp Standardization White Paper" is known from https://www.w3.org/TR/2019NVD-mini-app-white-paper-20190912/.

In US 2015/324478 A1, content of web pages is rated according to verification rules and a "normal web page" can be pushed depending on the outcome of the ratings.

### SUMMARY

The following is a summary of the topic described in detail in this invention.

Embodiments of the present invention provide a method and apparatus for processing a mini app material, a program product and a medium, in order to acquire large quantity and high-quality mini app materials.

An aspect of the present invention provides a method for processing a mini app material according to claim 1.

The embodiment of the present invention has the following advantages or beneficial effects: during the operation of the mini app, if the user browses the new page, the material content of the new page is extracted based on the material extraction rule of the mini app for use as the new material content, thereby overcoming the problem that the workload of artificial extraction of material content is large, the quantity of material content extracted is not comprehensive enough, and the quality is not high. It realizes automatically extraction of large quantity and high-quality mini app materials, and improving the effect of material extraction efficiency.

Further, before the extracting a material content of the new page based on a material extraction rule of the mini app, the method further includes: acquiring a material extraction rule of the mini app from a server, when the mini app starts; and loading the acquired material extraction rule.

Based on the above, the embodiment of the present invention has the following advantages or beneficial effects: by determining the material extraction rule of the mini app, different types of material content are extracted based on corresponding different material extraction rules for different types of pages, thus meeting material content requirement standards for the different pages.

Further, the acquiring a material extraction rule of the mini app from a server, includes: acquiring the material extraction rule of the mini app from the server, based on a to-be-extracted material type and/or material extraction rule version information.

Based on the above, the embodiment of the present invention has the following advantages or beneficial effects: by acquiring the material extraction rule of the mini app from the server, based on the to-be-extracted material type and/or material extraction rule version information, information of a to-be-extracted material can be more specifically and accurately limited, facilitating targeted extracting the material that meets the material extraction rule in material extraction.

Further, the material content of the new page includes at least one of: a title of the new page, a description, a picture link, a tag, a video link, or interaction information.

Based on the above, an embodiment of the present invention has the following advantages or beneficial effects: by extracting the material content of the new page including at least one of the title of the new page, the description, the picture link, the tag, the video link, or the interaction information, the extracted material content is more comprehensive and detailed, and meets the user's browsing requirements.

Further, the extracting a material content of the new page based on a material extraction rule of the mini app, includes: extracting the material content of the new page based on the material extraction rule of the mini app, via an asynchronous thread.

Based on the above, the embodiment of the present invention has the following advantages or beneficial effects: by extracting the material content of the new page via the asynchronous thread, the efficiency of material extraction is improved.

According to the invention, after extracting the material content of the new page, the method further includes: verifying the extracted material content to obtain a material content that meets a verification rule, based on the verification rule; and rating the material content that meets the verification rule, to push a material based on a rating result.

Based on the above, the embodiment of the present invention has the following advantages or beneficial effects: by verifying the extracted material content, and rating the material content that meets the verification rule then pushing, high quality of the pushed material content is guaranteed, avoiding the pushed material content including a blank page, an invalid link, an unclear picture, etc.

An aspect of the present invention further provides an apparatus for processing a mini app material according to claim 6.

Further, the apparatus further includes: a material extraction rule acquisition module, configured to acquire a material extraction rule of the mini app from a server, when the mini app starts; and a material extraction rule loading module, configured to load the acquired material extraction rule.

Further, the material extraction rule acquisition module is configured to: acquire the material extraction rule of the mini app from the server, based on a to-be-extracted material type and/or material extraction rule version information.

Further, the material content of the new page comprises at least one of: a title of the new page, a description, a picture link, a tag, a video link, or interaction information.

Further, the new material content determination module is configured to: extract the material content of the new page based on the material extraction rule of the mini app, via an asynchronous thread.

According to the invention, the apparatus further includes: a verification module, configured to verify the extracted material content to obtain a material content that meets a verification rule, based on the verification rule; and a pushing module, configured to rate the material content that meets the verification rule, to push a material based on a rating result.

An aspect of the present invention further providers a non-transitory computer readable storage medium according to claim 11, storing computer instructions. The computer instructions are used to cause the computer to perform the method according to any embodiment of the present invention.

An embodiment of the present invention provides a computer program product according to claim 12, including a computer program. The computer program, when executed by a processor, causes the processor to implement the method according to any embodiment of the present invention.

Preferred embodiments of the invention are defined in the appended dependent claims. Other effects of the above alternative implementations will be described below in combination with embodiments. Other aspects may be understood after reading and understanding accompanying drawings and the detailed description.

### BRIEF DESCRIPTION OF THE DRAWINGS

The accompanying drawings are used to better understand the present invention and do not constitute a limitation to the present invention.
Fig. 1 is a schematic flowchart of a method for processing a mini app material according to an embodiment of the present invention;
Fig. 2 is a schematic diagram of mini app material extraction according to an embodiment of the present invention;
Fig. 3 is a schematic flowchart of another method for processing a mini app material according to an embodiment of the present invention;
Fig. 4 is a flowchart of mini app material processing implementation according to an embodiment of the present invention;
Fig. 5 is a schematic structural diagram of an apparatus for processing a mini app material according to an embodiment of the present invention; and
Fig. 6 is a block diagram of an electronic device suitable for implementing the method for processing a mini app material according to embodiments of the present invention.

### DETAILED DESCRIPTION OF EMBODIMENTS

The following describes example embodiments of the present invention with reference to accompanying drawings, which include various details of embodiments of the present invention to facilitate understanding, and should be regarded as merely examples. Likewise, for clarity and conciseness, descriptions of well-known functions and structures are omitted in the following description.

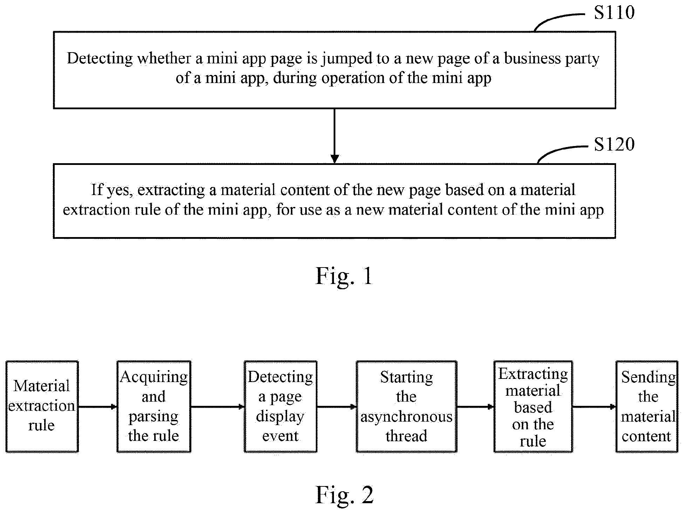

Fig. 1 is a schematic flowchart of a method for processing a mini app material according to an example not corresponding to the invention as defined in the claims but useful for the understanding thereof and related to embodiments thereof. The present example may be applied to automatic extraction of material content in a mini app. Typically, the present example may be applied to extracting a material content of a new page when a user perform an operation to jump a currently browsed mini app page to the new page. The method for processing a mini app material disclosed in the present example may be performed by an electronic device configured with a mini app host application, specifically may be performed by an apparatus for processing a mini app material, and the apparatus may be implemented by software and/or hardware. Referring to Fig. 1, the method for processing a mini app material provided in the present example includes the following steps.

S110, detecting whether a mini app page is jumped to a new page of a business party of a mini app, during operation of the mini app.

The business party of the mini app may be a mini app holder. General host applications support a variety of mini apps, and different mini apps may belong to the same business party, or belong to different business parties. The business party of the mini app is the business party of material content of the mini app. For example, mobile Baidu as the host application supports iQiyi mini apps, then the business party of the mini app is iQiyi, and iQiyi provides material content for the Iqiyi mini apps. In addition to including page of existing material content, the mini app also includes a page link of the business party. A page entered through the page link is the new page of the business party of the mini app. The host application does not have material content of the new page.

Currently, the mini app material content is generally sorted and collected by a developer. Each mini app page corresponds to a piece of material. There are a large number of mini app pages, including hundreds or even tens of millions of pieces of material information. Therefore, for the developer, the workload of sorting and submitting the material is very large. Therefore, in an embodiment of the present invention, based on part of the material content submitted by the developer, more and more comprehensive material content is extracted automatically, thereby enriching the material content.

For example, as shown in Fig. 2, when the user browses a page of a mini app, he/she may need to view another page, so the user may click to jump to a new page of the business party of the mini app. The page browsed by the user may contain more user-interested content, have greater value, and is suitable for being pushed to more users for browsing. Therefore, it is detected whether the mini app page is jumped to the new page to determine whether it is necessary to extract the material content, that is, detect a page display event.

In an embodiment of the present invention, the detection of user behavior and the extraction of material may be performed by tools in a material extraction software development kit SDK in a terminal electronic device. The material extraction software development kit maybe pre-configured in the electronic device. When the mini app operates, the material extraction SDK automatically detects whether the new page is jumped to by clicking by the user a recommended page in a currently displayed page of the mini app, to perform a subsequent operation when it is detected that the user browses the new page.

S120, in response to the mini app page being jumped to the new page of the business party of the mini app, extracting a material content of the new page based on a material extraction rule of the mini app, for use as a new material content of the mini app.

The material content of the new page includes at least one of: a title of the new page, a description, a picture link, a tag, a video link, or interaction information. The material extraction rule of the mini app may be a rule that specifies extracted concrete content of the mini app material, which may be determined based on the material content. For different types of mini app pages such as video, image-text, or questions and answers, the mini app pages correspond to different material extraction rules. For example, the material extraction rule of an image-text landing page may be title, description, picture link, comment, and likes, etc. The material extraction rule of a video landing page may be title, first picture link, video link, comment, and likes, etc. For a mini app page version, it may include a title tag, a body tag, a paragraph tag, a picture tag, a video tag, a comment tag, and a likes tag, etc. The material extraction rule may also be determined based on a component provided by APP in the terminal. For example, the APP provides a component for displaying video pages, a component for displaying image-text pages, and/or a component for displaying Q&A (Question and Answer) pages. The material extraction rule may be determined by the above types of pages.

For example, since there are various types of mini app pages, each type of page needs to display different content. For different types of pages, the types of extracted materials are also different. Therefore, in an embodiment of the present invention, different mini app material extraction rules are determined for different pages, and the material content of the new page is extracted based on the material extraction rule as the new material content of the mini app, so as to meet display requirements for different types of pages.

In an embodiment of the present embodiment, before the extracting a material content of the new page based on a material extraction rule of the mini app, the method further includes: acquiring a material extraction rule of the mini app from a server, when the mini app starts; and loading the acquired material extraction rule.

For example, the server may be the server of the mini app. As shown in Fig. 2, the material extraction rule is pre-stored in the server of the mini app. Before the material extraction SDK extracts the material content, the material extraction rule for a to-be-extracted material is acquired from the server, and the acquired material extraction rule is loaded in the material extraction SDK, to extract the material content in the new page of the mini app based on the material extraction rule, so that the extracted material content meets a display requirement for the page.

In an embodiment of the present embodiment, the acquiring a material extraction rule of the mini app from a server, includes: acquiring the material extraction rule of the mini app from the server, based on a to-be-extracted material type and/or material extraction rule version information.

For example, the to-be-extracted material type may include a video type, including materials such as long video and short video, image-text, Q&A, and live stream. When the user clicks to jump to the new page, the material type of the new page is determined, and for the material type, the pre-stored material extraction rule corresponding to the material type is acquired from the server. It may also be that the material extraction rule of the mini app is acquired from the server based on the to-be-extracted material extraction rule version information. Since version and page standards of the mini app may be updated and iterated constantly as the business develops, and at the same time business requirement standards for the material may change as the business changes, for the mini app page, the material content that needs to be extracted changes. Therefore, the material extraction rule version information in the server is updated in time, so that the material extraction rule version may be adjusted in time based on changes of the mini app version to meet a current page requirement standard. The material extraction SDK extracts the material extraction rule of the latest version from the server based on the material extraction version information to meet a current material content extraction requirement.

In an embodiment of the present invention, the extracting a material content of the new page based on a material extraction rule of the mini app, includes: extracting the material content of the new page based on the material extraction rule of the mini app, via an asynchronous thread.

For example, the extraction of the material content may be performed via the asynchronous thread, thereby improving the efficiency of material extraction. After the material content is extracted, the material content is sent for a subsequent operation step, such as further verification, rating, and storage.

The technical solution of the embodiments of the present invention reduces the workload of the developer for material extraction by automatically extracting mini app materials, improves the efficiency of material extraction, and extracts the material content of the new page based on the material extraction rule, thereby more comprehensively acquiring large quantity and high-quality materials, and further improving a subsequent distribution efficiency of the mini app.

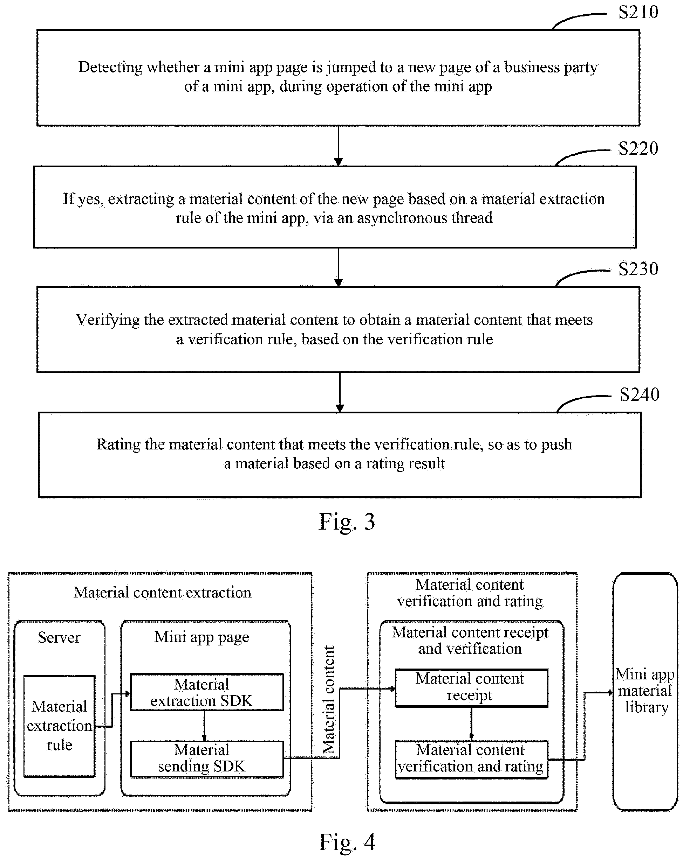

Fig. 3 is a schematic flowchart of another method for processing a mini app material according to an embodiment of the present invention. The present embodiment is an alternative solution proposed on the basis of the foregoing embodiments. Referring to Fig. 3^{,} the method for processing a mini app material provided in the present embodiment includes the following steps.

S210, detecting whether a mini app page is jumped to a new page of a business party of a mini app, during operation of the mini app.

S220, if yes, extracting a material content of the new page based on a material extraction rule of the mini app, via an asynchronous thread.

S230, verifying the extracted material content to obtain a material content that meets a verification rule, based on the verification rule.

For example, as shown in Fig. 4, the extracted material content of the mini app may include content that is inappropriate to be pushed or content that does not comply with network information security, such as advertising content, and may also include content that cannot be displayed normally, such as a blank page, an invalid link, an unclear picture or other material content. Therefore, after the material content is extracted, the extracted material content may be verified, so as to select material content suitable to be pushed. The verification may include: first performing a basic verification on the material content, then detecting form of the material content to initially judge quality of the material content. According to the invention, if it is detected that the title or description in the material content is empty, or a length is less than a preset character length, the material content is marked as a low-quality material and the verification fails. For a material that fails the verification, rating analysis may be directly performed on the material. If the basic verification approves, an advanced verification is performed on the material content to verify whether content of the material meets a standards or requirement. For different types of material content, different material verification strategies may be formulated, and the material verification strategies may be updated and changed based on actual situations. For example, for a picture link content of image-text material, the verification strategy may be: detecting whether the content includes advertising, etc. For a material that passes the advanced verification, rating analysis is performed.

S240, rating the material content that meets the verification rule, so as to push a material based on a rating result.

In an embodiment of the present embodiment, rating analysis may also be performed on the material content to determine quality of the material content. For example, a classification strategy may be customized. According to the invention, the material content is divided into high-quality material, medium-high-quality material and low-quality material, where the high-quality material is material that passes both the basic verification and the advanced verification. The low-quality material is material content that does not pass the basic verification, or material content that pass the basic verification but fail the advanced verification. Other material content is classified as the medium-high-quality material content. Classified material content is stored to a material library to facilitate subsequent material distribution. Rating can more directly show the quality of the material content, so that it is convenient to select material content of higher quality to push, so that the user can browse normally, the user's browsing tendency is met, and the distribution efficiency of the mini app is improved.

According to the invention, the material content is verified and rating analysis is performed to detect the content of the material to determine the quality of the material content, and select high-quality material content to push to the user. In addition, due to the automatic completion of material extraction and verification and rating, the distribution efficiency of material extraction is improved. While ensuring abundant quantity of the material, the quality of the pushed material is also improved, thereby increasing page views and traffic acquisitions of the mini app page.

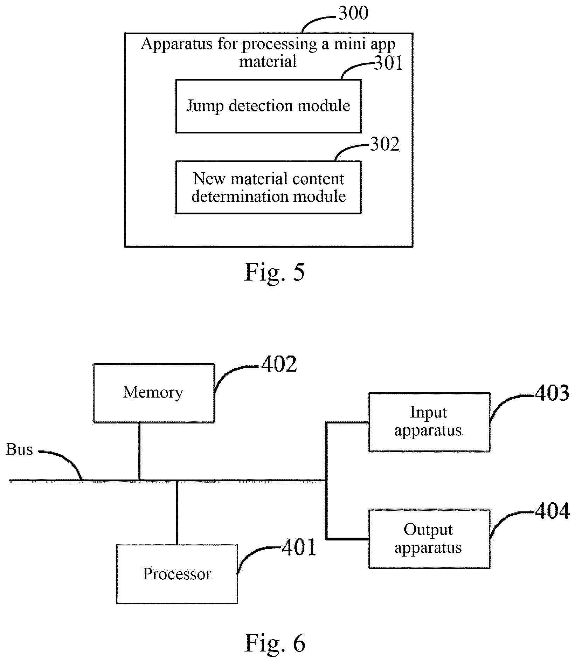

Fig. 5 is a schematic structural diagram of an apparatus for processing a mini app material not according to the invention but present for illustration purposes only. Referring to Fig. 5, it discloses an apparatus 300 for processing a mini app material, and the apparatus 300 includes: a jump detection module 301 and a new material content determination module 302.

The jump detection module 301 is configured to detect whether a mini app page is jumped to a new page of a business party of a mini app, during operation of the mini app.

The new material content determination module 302 is configured to extract a material content of the new page based on a material extraction rule of the mini app, for use as a new material content of the mini app, in response to that the mini app page is jumped to the new page of the business party of the mini app.

In an embodiment, the apparatus further includes: a material extraction rule acquisition module, configured to acquire a material extraction rule of the mini app from a server, when a mini app starts; and a material extraction rule loading module, configured to load the acquired material extraction rule.

In an embodiment, the material extraction rule acquisition module is specifically configured to: acquire the material extraction rule of the mini app from the server, based on a to-be-extracted material type and/or material extraction rule version information.

In an embodiment, the material content of the new page includes at least one of: a title of the new page, a description, a picture link, a tag, a video link, or interaction information.

In an embodiment, the new material content determination module 302 is specifically configured to: extract the material content of the new page based on the material extraction rule of the mini app, via an asynchronous thread.

According to the invention, the apparatus further includes: a verification module, configured to verify the extracted material content to obtain a material content that meets a verification rule, based on the verification rule; and a pushing module, configured to rate the material content that meets the verification rule, to push a material based on a rating result.

The apparatus for processing a mini app material provided in this embodiment of the present invention may perform the method for processing a mini app material provided in any embodiment of the present invention, and has the corresponding functional modules and beneficial effects for performing the method.

According to an embodiment of the present invention, the present invention further provides a readable storage medium.

As shown in Fig. 6, Fig. 6 is a block diagram of an electronic device for implementing the method for processing a mini app material not according to the invention and present for illustration purposes only. The electronic device is intended to represent various forms of digital computers, such as laptop computers, desktop computers, workbenches, personal digital assistants, electronic devices, blade servers, mainframe computers, and other suitable computers. The electronic device may also represent various forms of mobile apparatuses, such as personal digital processors, cellular phones, smart phones, wearable devices, and other similar computing apparatuses. The components shown herein, their connections and relationships, and their functions are merely examples, and are not intended to limit the implementation of the present invention described and/or claimed herein.

As shown in Fig. 6, the electronic device includes: one or more processors 401, a memory 402, and interfaces for connecting various components, including high-speed interfaces and low-speed interfaces. The various components are connected to each other using different buses, and may be installed on a common motherboard or in other methods as needed. The processor may process instructions executed within the electronic device, including instructions stored in or on the memory to display graphic information of GUI on an external input/output apparatus (such as a display device coupled to the interface). In other embodiments, a plurality of processors and/or a plurality of buses may be used together with a plurality of memories and a plurality of memories if desired. Similarly, a plurality of electronic devices may be connected, and the devices provide some necessary operations, for example, as a server array, a set of blade servers, or a multi-processor system. In Fig. 6, one processor 401 is used as an example.

The memory 402 is a non-transitory computer readable storage medium provided by the present invention. The memory stores instructions executable by at least one processor, so that the at least one processor performs the method for processing a mini app material provided by the present invention. The non-transitory computer readable storage medium of the present invention stores computer instructions for causing a computer to perform the method for processing a mini app material provided by the present invention.

The memory 402, as a non-transitory computer readable storage medium, may be used to store non-transitory software programs, non-transitory computer executable programs and modules, such as program instructions/modules corresponding to the method for processing a mini app material in the embodiments of the present invention (for example, the jump detection module 301 and the new material content determination module 302 as shown in Fig. 5). The processor 401 executes the non-transitory software programs, instructions, and modules stored in the memory 402 to execute various functional applications and data processing of the electronic device, that is, to implement the method for processing a mini app material in the foregoing method embodiments.

The memory 402 may include a storage program area and a storage data area, where the storage program area may store an operating system and at least one function required application program; and the storage data area may store data created by the use of the electronic device for processing a mini app material. In addition, the memory 402 may include a high-speed random access memory, and may also include a non-transitory memory, such as at least one magnetic disk storage device, a flash memory device, or other non-transitory solid-state storage devices. In some embodiments, the memory 402 may optionally include memories remotely provided with respect to the processor 401, and these remote memories may be connected to the electronic device for processing a mini app material through a network. Examples of the above network include but are not limited to the Internet, intranet, local area network, mobile communication network, and combinations thereof.

The electronic device of the method for processing a mini app material may further include: an input apparatus 403 and an output apparatus 404. The processor 401, the memory 402, the input apparatus 403, and the output apparatus 404 may be connected through a bus or in other methods. In Fig. 6, connection through the bus is used as an example.

The input apparatus 603 may receive input digital or character information, and generate key signal inputs related to user settings and function control of the electronic device of the method for processing a mini app material, such as touch screen, keypad, mouse, trackpad, touchpad, pointing stick, one or more mouse buttons, trackball, joystick and other input apparatuses. The output apparatus 404 may include a display device, an auxiliary lighting apparatus (for example, LED), a tactile feedback apparatus (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and an electronic device. The client and the electronic device are generally far from each other and usually interact through the communication network. The relationship between the client and the electronic device is generated by computer programs that run on the corresponding computer and have a client-server relationship with each other.

## Claims

1. A computer-implemented method for processing a mini app material, the method comprising:
detecting (S210) whether a mini app page is jumped to a new page of a business party of a mini app, during operation of the mini app; and
in response to the mini app page being jumped to the new page of the business party of the mini app, extracting (S220) a material content of the new page based on a material extraction rule of the mini app, for use as a new material content of the mini app;
wherein after extracting (S220) the material content of the new page, the method further comprises:
verifying (S230) the extracted material content to obtain a material content that meets a verification rule, based on the verification rule; and
rating (S240) the material content that meets the verification rule, and pushing rated material content based on a result of said rating,
wherein the verifying (S230) comprises:
first performing a basic verification on the extracted material content and detecting a form of the material content to initially judge a quality of the material content by detecting whether a title or description in the material content is empty, or whether a length is less than a preset character length,
if the material content fails the verification, directly performing the rating (S240), and
if the material content is approved by the basic verification, performing an advanced verification for verifying whether content of the material content meets a requirement; and
wherein the rated material content is divided into high-quality material, medium-high-quality material and low-quality material,
wherein the high-quality material is material that passes both the basic verification and the advanced verification, the low-quality material is material that does not pass the basic verification, and the medium-high-quality material is material other than high-quality material and low-quality material; and
wherein said pushing rated material content based on the result of said rating comprises: selecting high-quality material content and pushing the selected high-quality material content to a user for browsing.

2. The method according to claim 1, wherein before the extracting a material content of the new page based on a material extraction rule of the mini app, the method further comprises:
acquiring a material extraction rule of the mini app from a server, when the mini app starts; and
loading the acquired material extraction rule.

3. The method according to claim 2, wherein the acquiring a material extraction rule of the mini app from a server, comprises:
acquiring the material extraction rule of the mini app from the server, based on a to-be-extracted material type and/or material extraction rule version information.

4. The method according to any one of claims 1-3, wherein the material content of the new page comprises at least one of: a title of the new page, a description, a picture link, a tag, a video link, or interaction information.

5. The method according to any one of claims 1-4, wherein the extracting a material content of the new page based on a material extraction rule of the mini app, comprises:
extracting the material content of the new page based on the material extraction rule of the mini app, via an asynchronous thread.

6. An apparatus for processing a mini app material, the apparatus comprising:
a jump detection module (301), configured to detect whether a mini app page is jumped to a new page of a business party of a mini app, during operation of the mini app; and
a new material content determination module (302), configured to extract a material content of the new page based on a material extraction rule of the mini app, for use as a new material content of the mini app, in response to the mini app page being jumped to the new page of the business party of the mini app;
wherein the apparatus further comprises:
a verification module, configured to verify the extracted material content to obtain a material content that meets a verification rule, based on the verification rule; and
a pushing module, configured to rate the material content that meets the verification rule, and push rated material content based on a result of said rating;
wherein the verification module is configured to verify the extracted material comprising:
first performing a basic verification on the extracted material content and detecting a form of the material content to initially judge a quality of the material content by detecting whether a title or description in the material content is empty, or whether a length is less than a preset character length,
if the material content fails the verification, directly performing the rating (S240), and
if the material content is approved by the basic verification, performing an advanced verification for verifying whether content of the material content meets a requirement;
wherein the rated material content is divided into high-quality material, medium-high-quality material and low-quality material,
wherein the high-quality material is material that passes both the basic verification and the advanced verification, the low-quality material is material that does not pass the basic verification, and the medium-high-quality material is material other than high-quality material and low-quality material; and
wherein said pushing rated material content based on the result of said rating comprises: selecting high-quality material content and pushing the selected high-quality material content to a user for browsing.

7. The apparatus according to claim 6, wherein the apparatus further comprises:
a material extraction rule acquisition module, configured to acquire a material extraction rule of the mini app from a server, when the mini app starts; and
a material extraction rule loading module, configured to load the acquired material extraction rule.

8. The apparatus according to claim 7, wherein the material extraction rule acquisition module is configured to:
acquire the material extraction rule of the mini app from the server, based on a to-be-extracted material type and/or material extraction rule version information.

9. The apparatus according to any one of claims 6-8, wherein the material content of the new page comprises at least one of: a title of the new page, a description, a picture link, a tag, a video link, or interaction information.

10. The apparatus according to any one of claims 6-9, wherein the new material content determination module (302) is configured to:
extract the material content of the new page based on the material extraction rule of the mini app, via an asynchronous thread.

11. A non-transitory computer readable storage medium, storing computer instructions, wherein the computer instructions are used to cause the computer to perform the method according to any one of claims 1-5.

12. A computer program product, comprising a computer program, wherein the computer program, when executed by a processor, causes the processor to implement the method according to any one of claims 1-5.

## Patentansprüche

1. Computerimplementiertes Verfahren zum Verarbeiten eines Mini-App-Materials, wobei das Verfahren Folgendes umfasst:
Detektieren (S210), ob eine Mini-App-Seite während des Betriebs der Mini-App zu einer neuen Seite eines Geschäftspartners einer Mini-App gesprungen wird; und
als Reaktion darauf, dass die Mini-App-Seite zu der neuen Seite des Geschäftspartners der Mini-App gesprungen wird, Extrahieren (S220) eines Materialinhalts der neuen Seite basierend auf einer Materialextraktionsregel der Mini-App zur Verwendung als neuer Materialinhalt der Mini-App;
wobei das Verfahren nach dem Extrahieren (S220) des Materialinhalts der neuen Seite ferner Folgendes umfasst:
Verifizieren (S230) des extrahierten Materialinhalts, um einen Materialinhalt zu erhalten, der eine Verifizierungsregel erfüllt, basierend auf der Verifizierungsregel; und
Bewerten (S240) des Materialinhalts, der die Verifizierungsregel erfüllt, und Verschieben des bewerteten Materialinhalts basierend auf einem Ergebnis der Bewertung,
wobei das Verifizieren (S230) Folgendes umfasst:
zuerst Durchführen einer grundlegenden Verifizierung an dem extrahierten Materialinhalt und Detektieren einer Form des Materialinhalts, um anfänglich eine Qualität des Materialinhalts zu beurteilen, indem detektiert wird, ob ein Titel oder eine Beschreibung in dem Materialinhalt leer ist oder ob eine Länge kleiner als eine voreingestellte Zeichenlänge ist,
falls der Materialinhalt die Verifizierung nicht besteht, direktes Durchführen der Bewertung (S240), und
falls der Materialinhalt durch die grundlegende Verifizierung genehmigt wird, Durchführen einer erweiterten Verifizierung zum Verifizieren, ob der Inhalt des Materialinhalts eine Anforderung erfüllt; und
wobei der bewertete Materialinhalt in Material mit hoher Qualität, Material mit mittlerer Qualität und Material mit niedriger Qualität unterteilt ist,
wobei das Material mit hoher Qualität Material ist, das sowohl die grundlegende Verifizierung als auch die erweiterte Verifizierung besteht, das Material mit niedriger Qualität Material ist, das die grundlegende Verifizierung nicht besteht, und das Material mit mittlerer Qualität anderes Material als Material mit hoher Qualität und Material mit niedriger Qualität ist; und
wobei das Verschieben des bewerteten Materialinhalts basierend auf dem Ergebnis der Bewertung Folgendes umfasst: Auswählen des Materialinhalts mit hoher Qualität und Verschieben des ausgewählten Materialinhalts mit hoher Qualität zu einem Benutzer zum Browsen.

2. Verfahren nach Anspruch 1, wobei das Verfahren vor dem Extrahieren eines Materialinhalts der neuen Seite basierend auf einer Materialextraktionsregel der Mini-App ferner Folgendes umfasst:
Erfassen einer Materialextraktionsregel der Mini-App von einem Server, wenn die Mini-App startet; und
Laden der erfassten Materialextraktionsregel.

3. Verfahren nach Anspruch 2, wobei das Erfassen einer Materialextraktionsregel der Mini-App von einem Server Folgendes umfasst:
Erfassen der Materialextraktionsregel der Mini-App von dem Server basierend auf einem zu extrahierenden Materialtyp und/oder Materialextraktionsregelversionsinformationen.

4. Verfahren nach einem der Ansprüche 1-3, wobei der Materialinhalt der neuen Seite mindestens eines von Folgendem umfasst: einen Titel der neuen Seite, eine Beschreibung, einen Bild-Link, ein Tag, einen Videolink oder Interaktionsinformationen.

5. Verfahren nach einem der Ansprüche 1-4, wobei das Extrahieren eines Materialinhalts der neuen Seite basierend auf einer Materialextraktionsregel der Mini-App Folgendes umfasst:
Extrahieren des Materialinhalts der neuen Seite basierend auf der Materialextraktionsregel der Mini-App über einen asynchronen Thread.

6. Vorrichtung zum Verarbeiten eines Mini-App-Materials, wobei die Vorrichtung Folgendes umfasst:
ein Sprungdetektionsmodul (301), das konfiguriert ist, um zu detektieren, ob eine Mini-App-Seite während des Betriebs der Mini-App zu einer neuen Seite eines Geschäftspartners einer Mini-App gesprungen wird; und
ein Bestimmungsmodul (302) für neuen Materialinhalt, das konfiguriert ist, um einen Materialinhalt der neuen Seite basierend auf einer Materialextraktionsregel der Mini-App zur Verwendung als neuer Materialinhalt der Mini-App als Reaktion darauf, dass die Mini-App-Seite zu der neuen Seite des Geschäftspartners der Mini-App gesprungen wird, zu extrahieren;
wobei die Vorrichtung ferner Folgendes umfasst:
ein Verifizierungsmodul, das konfiguriert ist, um den extrahierten Materialinhalt zu verifizieren, um einen Materialinhalt zu erhalten, der eine Verifizierungsregel erfüllt,
basierend auf der Verifizierungsregel; und
ein Verschiebungsmodul, das konfiguriert ist, um den Materialinhalt, der die Verifizierungsregel erfüllt, zu bewerten und den bewerteten Materialinhalt basierend auf einem Ergebnis der Bewertung zu verschieben;
wobei das Verifizierungsmodul konfiguriert ist, um das extrahierte Material zu verifizieren, umfassend:
zuerst Durchführen einer grundlegenden Verifizierung an dem extrahierten Materialinhalt und Detektieren einer Form des Materialinhalts, um anfänglich eine Qualität des Materialinhalts zu beurteilen, indem detektiert wird, ob ein Titel oder eine Beschreibung in dem Materialinhalt leer ist oder ob eine Länge kleiner als eine voreingestellte Zeichenlänge ist,
falls der Materialinhalt die Verifizierung nicht besteht, direktes Durchführen der Bewertung (S240), und
falls der Materialinhalt durch die grundlegende Verifizierung genehmigt wird, Durchführen einer erweiterten Verifizierung zum Verifizieren, ob der Inhalt des Materialinhalts eine Anforderung erfüllt;
wobei der bewertete Materialinhalt in Material mit hoher Qualität, Material mit mittlerer Qualität und Material mit niedriger Qualität unterteilt ist,
wobei das Material mit hoher Qualität Material ist, das sowohl die grundlegende Verifizierung als auch die erweiterte Verifizierung besteht, das Material mit niedriger Qualität Material ist, das die grundlegende Verifizierung nicht besteht, und das Material mit mittlerer Qualität anderes Material als Material mit hoher Qualität und Material mit niedriger Qualität ist; und
wobei das Verschieben des bewerteten Materialinhalts basierend auf dem Ergebnis der Bewertung Folgendes umfasst: Auswählen des Materialinhalts mit hoher Qualität und Verschieben des ausgewählten Materialinhalts mit hoher Qualität zu einem Benutzer zum Browsen.

7. Vorrichtung nach Anspruch 6, wobei die Vorrichtung ferner Folgendes umfasst:
ein Materialextraktionsregelerfassungsmodul, das konfiguriert ist, um eine Materialextraktionsregel der Mini-App von einem Server zu erfassen, wenn die Mini-App startet; und
ein Materialextraktionsregellademodul, das konfiguriert ist, um die erfasste Materialextraktionsregel zu laden.

8. Vorrichtung nach Anspruch 7, wobei das Materialextraktionsregelerfassungsmodul konfiguriert ist, um:
die Materialextraktionsregel der Mini-App von dem Server basierend auf einem zu extrahierenden Materialtyp und/oder Materialextraktionsregelversionsinformationen zu erfassen.

9. Vorrichtung nach einem der Ansprüche 6-8, wobei der Materialinhalt der neuen Seite mindestens eines von Folgendem umfasst: einen Titel der neuen Seite, eine Beschreibung, einen Bild-Link, ein Tag, einen Videolink oder Interaktionsinformationen.

10. Vorrichtung nach einem der Ansprüche 6-9, wobei das Bestimmungsmodul (302) für neuen Materialinhalt konfiguriert ist, um:
den Materialinhalt der neuen Seite basierend auf der Materialextraktionsregel der Mini-App über einen asynchronen Thread zu extrahieren.

11. Nichtflüchtiges computerlesbares Speichermedium, das Computeranweisungen speichert, wobei die Computeranweisungen verwendet werden, um den Computer zu veranlassen, das Verfahren nach einem der Ansprüche 1-5 durchzuführen.

12. Computerprogrammprodukt, umfassend ein Computerprogramm, wobei das Computerprogramm, wenn es von einem Prozessor ausgeführt wird, den Prozessor veranlasst, das Verfahren nach einem der Ansprüche 1-5 zu implementieren.

## Revendications

1. Procédé mis en oeuvre par ordinateur pour traiter un matériel de mini-application, le procédé comprenant :
la détection (S210) si une page de mini-application est sautée vers une nouvelle page d'un partenaire d'une mini-application, pendant le fonctionnement de la mini-application ; et
en réponse au fait que la page de mini-application est sautée vers la nouvelle page du partenaire de la mini-application, l'extraction (S220) d'un contenu matériel de la nouvelle page sur la base d'une règle d'extraction de matériel de la mini-application, pour une utilisation en tant que nouveau contenu matériel de la mini-application ;
dans lequel après l'extraction (S220) du contenu matériel de la nouvelle page, le procédé comprend en outre :
la vérification (S230) du contenu matériel extrait pour obtenir un contenu matériel qui satisfait une règle de vérification, sur la base de la règle de vérification ; et
l'évaluation (S240) du contenu matériel qui satisfait la règle de vérification, et la poussée du contenu matériel évalué sur la base d'un résultat de ladite évaluation,
dans lequel la vérification (S230) comprend :
la première réalisation d'une vérification de base sur le contenu matériel extrait et la détection d'une forme du contenu matériel pour juger initialement une qualité du contenu matériel en détectant si un titre ou une description dans le contenu matériel est vide, ou si une longueur est inférieure à une longueur de caractère prédéfinie,
si le contenu matériel échoue à la vérification, la réalisation directe de l'évaluation (S240), et
si le contenu matériel est approuvé par la vérification de base, la réalisation d'une vérification avancée pour vérifier si le contenu du contenu matériel satisfait une exigence ; et
dans lequel le contenu matériel évalué est divisé en un matériau de haute qualité, un matériau de moyenne haute qualité et un matériau de basse qualité,
dans lequel le matériau de haute qualité est un matériau qui réussit à la fois la vérification de base et la vérification avancée, le matériau de basse qualité est un matériau qui ne réussit pas la vérification de base, et le matériau de moyenne haute qualité est un matériau autre qu'un matériau de haute qualité et un matériau de basse qualité ; et
dans lequel ladite poussée du contenu matériel évalué sur la base du résultat de ladite évaluation comprend : la sélection d'un contenu matériel de haute qualité et la poussée du contenu matériel de haute qualité sélectionné vers un utilisateur pour une navigation.

2. Procédé selon la revendication 1, dans lequel avant l'extraction d'un contenu matériel de la nouvelle page sur la base d'une règle d'extraction de matériel de la mini-application, le procédé comprend en outre :
l'acquisition d'une règle d'extraction de matériel de la mini-application à partir d'un serveur, lorsque la mini-application démarre ; et
le chargement de la règle d'extraction de matériel acquise.

3. Procédé selon la revendication 2, dans lequel l'acquisition d'une règle d'extraction de matériel de la mini-application à partir d'un serveur comprend :
l'acquisition de la règle d'extraction de matériel de la mini-application à partir du serveur, sur la base d'un type de matériel à extraire et/ou d'informations de version de règle d'extraction de matériel.

4. Procédé selon l'une quelconque des revendications 1 à 3, dans lequel le contenu matériel de la nouvelle page comprend au moins l'un parmi : un titre de la nouvelle page, une description, un lien d'image, une étiquette, un lien vidéo, ou des informations d'interaction.

5. Procédé selon l'une quelconque des revendications 1 à 4, dans lequel l'extraction d'un contenu matériel de la nouvelle page sur la base d'une règle d'extraction de matériel de la mini-application comprend :
l'extraction du contenu matériel de la nouvelle page sur la base de la règle d'extraction de matériel de la mini-application, par l'intermédiaire d'un fil asynchrone.

6. Appareil pour traiter un matériel de mini-application, l'appareil comprenant :
un module de détection de saut (301), configuré pour détecter si une page de mini-application est sautée vers une nouvelle page d'un partenaire d'une mini-application, pendant le fonctionnement de la mini-application ; et
un module de détermination de nouveau contenu matériel (302), configuré pour extraire un contenu matériel de la nouvelle page sur la base d'une règle d'extraction de matériel de la mini-application, pour une utilisation en tant que nouveau contenu matériel de la mini-application, en réponse au fait que la page de mini-application est sautée vers la nouvelle page du partenaire de la mini-application ;
dans lequel l'appareil comprend en outre :
un module de vérification, configuré pour vérifier le contenu matériel extrait pour obtenir un contenu matériel qui satisfait une règle de vérification, sur la base de la règle de vérification ; et
un module de poussée, configuré pour évaluer le contenu matériel qui satisfait la règle de vérification, et pousser le contenu matériel évalué sur la base d'un résultat de ladite évaluation ;
dans lequel le module de vérification est configuré pour vérifier le contenu extrait comprenant :
la première réalisation d'une vérification de base sur le contenu matériel extrait et la détection d'une forme du contenu matériel pour juger initialement une qualité du contenu matériel en détectant si un titre ou une description dans le contenu matériel est vide, ou si une longueur est inférieure à une longueur de caractère prédéfinie,
si le contenu matériel échoue à la vérification, la réalisation directe de l'évaluation (S240), et
si le contenu matériel est approuvé par la vérification de base, la réalisation d'une vérification avancée pour vérifier si le contenu du contenu matériel satisfait une exigence ;
dans lequel le contenu matériel évalué est divisé en un matériau de haute qualité, un matériau de moyenne haute qualité et un matériau de basse qualité,
dans lequel le matériau de haute qualité est un matériau qui réussit à la fois la vérification de base et la vérification avancée, le matériau de basse qualité est un matériau qui ne réussit pas la vérification de base, et le matériau de moyenne haute qualité est un matériau autre qu'un matériau de haute qualité et un matériau de basse qualité ; et
dans lequel ladite poussée du contenu matériel évalué sur la base du résultat de ladite évaluation comprend : la sélection d'un contenu matériel de haute qualité et la poussée du contenu matériel de haute qualité sélectionné vers un utilisateur pour une navigation.

7. Appareil selon la revendication 6, dans lequel l'appareil comprend en outre :
un module d'acquisition de règle d'extraction de matériel, configuré pour acquérir une règle d'extraction de matériel de la mini-application à partir d'un serveur, lorsque la mini-application démarre ; et
un module de chargement de règle d'extraction de matériel, configuré pour charger la règle d'extraction de matériel acquise.

8. Appareil selon la revendication 7, dans lequel le module d'acquisition de règle d'extraction de matériel est configuré pour :
acquérir la règle d'extraction de matériel de la mini-application à partir du serveur, sur la base d'un type de matériel à extraire et/ou d'informations de version de règle d'extraction de matériel.

9. Appareil selon l'une quelconque des revendications 6 à 8, dans lequel le contenu matériel de la nouvelle page comprend au moins l'un parmi : un titre de la nouvelle page, une description, un lien d'image, une étiquette, un lien vidéo, ou des informations d'interaction.

10. Appareil selon l'une quelconque des revendications 6 à 9, dans lequel le module de détermination de nouveau contenu matériel (302) est configuré pour :
extraire le contenu matériel de la nouvelle page sur la base de la règle d'extraction de matériel de la mini-application, par l'intermédiaire d'un fil asynchrone.

11. Support de stockage non transitoire lisible par ordinateur, stockant des instructions informatiques, dans lequel les instructions informatiques sont utilisées pour amener l'ordinateur à réaliser le procédé selon l'une quelconque des revendications 1 à 5.

12. Produit de programme informatique, comprenant un programme informatique, dans lequel le programme informatique, lorsqu'il est exécuté par un processeur, amène le processeur à mettre en oeuvre le procédé selon l'une quelconque des revendications 1 à5.
